# EUROPÄISCHE PATENTSCHRIFT

(11) **EP 1 638 842 B1**
(45) Veröffentlichungstag und Bekanntmachung des Hinweises auf die Patenterteilung: **12.03.2008**
(21) Anmeldenummer: 04740067.6
(22) Anmeldetag: 18.06.2004
(51) Int. Cl.: B64F 1/20, F21V 17/10, F21V 19/04

(54) **UNIDIREKTIONALE LEUCHTVORRICHTUNG ZUM BELEUCHTEN VON OBJEKTEN UND/ODER MARKIEREN VON FAHRBAHNEN, VORZUGSWEISE IM FLUGHAFENBEREICH**
UNIDIRECTIONAL LIGHTING DEVICE FOR ILLUMINATING OBJECTS AND/OR FOR MARKING LANES, PREFERABLY IN THE AIRPORT AREA
DISPOSITIF D'ECLAIRAGE UNIDIRECTIONNEL POUR ECLAIRER DES OBJETS ET/OU REPERER DES PISTES, DE PREFERENCE DANS UN AEROPORT

(30) Priorität: 30.06.2003 DE 10329496
(43) Veröffentlichungstag der Anmeldung: 29.03.2006
(73) Patentinhaber: SIEMENS AKTIENGESELLSCHAFT, 80333 München (DE)
(72) Erfinder: VANDEVOORDE, Jean-Claude, B-1820 Steenkokkerzeel (BE); WILLEMS, Louis, B-3400 Landen (BE); LAENEN, Guy, B-3061 Leefdaal (BE)
(86) Internationale Anmeldenummer: PCT/EP2004/006623
(87) Internationale Veröffentlichungsnummer: WO 2005/000679

(56) Entgegenhaltungen:
- US-A- 1 871 205
- US-A- 3 991 905
- US-A- 4 722 032
- US-A- 4 920 468
- US-A- 5 584 574
- US-A- 5 988 833

## Beschreibung

Die Erfindung bezieht sich auf eine unidirektionale Leuchtvorrichtung zum Beleuchten von Objekten und/oder Markieren von Fahrbahnen, vorzugsweise im Flughafenbereich, nach dem Oberbegriff des Patentanspruches 1.

US 4,920,468 offenbart einen Suchscheinwerfer mit einem Gehäuse, welches auf einem Fußteil um eine vertikale Achse drehbar gelagert ist. In das Gehäuse ist eine Baueinheit längs einer Führung einsetzbar, die eine Lichtquelle mit einer Glühlampe und einem Reflektor, einen Kippmechanismus für die Glühlampe sowie eine Frontglasscheibe aufweist. Die eingesetzte Baueinheit wird über Schrauben am Gehäuse befestigt.

Aus US 5,584,574 ist eine einstellbare Flutlichtvorrichtung bekannt, die ein abgeschrägtes Schirmblech aufweist, welches um 360° drehbar ist. Die wesentlichen Komponenten dieser Vorrichtung bestehen aus einem wetterfesten nichtmetallischen Material, welches für die Verwendung im Freien - auch bei hohen Temperaturen - geeignet ist. Beispielsweise bestehen das Schirmblech, ein Gehäuse, ein Arm und ein Verbindungsgehäuse aus Kunststoff.

Aus der Druckschrift "Approach, Threshold Runway End High Intensity Elevated Light", veröffentlicht von ADB, a Siemens Company, 4/11.97, Bestellnummer E10001-T95-A61-V1-7600, ist eine unidirektionale Leuchtvorrichtung zur Markierung des Annäherungs- und Schwellenbereiches sowie der Start- und Landebahnbegrenzungen von Flughäfen bekannt. Die Leuchtvorrichtung weist einen Grundkörper mit einem Außengehäuse auf, der auf dem Boden, einem Pfosten oder einem Mast aufstell- und befestigbar ist. Die Leuchtvorrichtung weist ferner optische Komponenten, nämlich eine Lichtquelle, einen Reflektor und eine Frontscheibe, zum Erzeugen eines parallelen Lichtbündels auf.

Ein Wechsel der Lichtquelle bei dieser bekannten Leuchtvorrichtung ist zwar ohne Werkzeug, jedoch nur am Aufstellungsort im Feld über eine an der Rückwand des Außengehäuses angeordnete Tür möglich. Für eine Werkstattwartung der optischen Komponenten ist die komplette Leuchtvorrichtung abzubauen, in die Werkstatt zu transportieren und nach Wiederaufstellung neu zu justieren. Der Grundkörper der Leuchtvorrichtung besteht aus einem Aluminiumguss-Außengehäuse sowie aus Edelmetall-Bauteilen und ist damit schwer und nur bedingt korrosionsbeständig.

Die Patentschrift US 4,722,032 offenbart eine Heckscheinwerferanordnung zur Befestigung in einem Hohlraum einer Karosserie eines Fahrzeuges, welche ein Gehäuse aus Kunststoff zur Aufnahme eines Scheinwerfers aufweist. Der Scheinwerfer umfasst einen Reflektor, dessen offenes Ende durch eine Linse verschlossen ist und der eine austauschbare Glühbirne trägt. Über ein Scharnier mit relativ zueinander drehbaren Schwenkarmen ist der Reflektor am Gehäuse angelenkt, so dass der Scheinwerfer um eine horizontale Achse zwischen einer geschlossenen und einer geöffneten Stellung bewegt werden kann.

Der Erfindung liegt daher die Aufgabe zugrunde, bei einer Leuchtvorrichtung der eingangs genannten Art die erwähnten Nachteile des Standes der Technik zu überwinden, insbesondere eine Leuchtvorrichtung bereitzustellen, deren Wartung vereinfacht ist.

Erfindungsgemäß wird die Aufgabe gelöst durch eine gattungsgemäße Leuchtvorrichtung mit den im kennzeichnenden Teil des Patentanspruches 1 aufgeführten Merkmalen. Durch die Zusammenfassung der zum Teil metallischen optischen Komponenten in einen separaten Optikmodul, der in den Grundkörper der Leuchtvorrichtung einsetzbar ist, und durch die Ausführung von größeren Bauteilen des Außengehäuses des Grundkörpers aus nichtmetallischen Werkstoffen wird ein geringeres Gesamtgewicht der erfindungsgemäßen Leuchtvorrichtung erreicht, die daher im Feld einfacher austauschbar ist. Durch die Verwendung nichtmetallischer Materialien für das Außengehäuse wird insbesondere eine höhere Korrosionsbeständigkeit für eine erfindungsgemäße Leuchtvorrichtung erzielt. Des Weiteren kann die Leuchtvorrichtung insgesamt mit einer kleineren Baugröße ausgeführt werden, was die Windempfindlichkeit und damit die Bruchgefahr herabsetzt. Hierdurch ist es möglich, eine erfindungsgemäße Leuchtvorrichtung auf höheren Masten zu befestigen als im Stand der Technik. Die nichtmetallische, also nichtleitende Ausführung des Außengehäuses erlaubt die isolierte Befestigung eines Ansteuerverstärkers der Leuchtvorrichtung, was die verlässliche Übertragung von Auslösesignalen sogar über Kabellängen bis zu 250 m ermöglicht. Die Kunststoffausführung des Außengehäuses bringt eine höhere Gestaltungs- und Produktionsflexibilität sowie ein besseres Reibungsverhalten mit sich. Aufgrund der geringen Wärme- und elektrischen Leitfähigkeit nichtmetallischer Werkstoffe kann ein entsprechend ausgeführtes Außengehäuse problemloser angefasst und gehandhabt werden. Ist der Optikmodul über Schwenkmittel drehbar am Grundkörper angelenkt, kann die Leuchtvorrichtung vor Ort, d.h. am Aufstellungsort im Feld, etwa durch Aufklappen geöffnet werden, wodurch ein ungehinderter Zugriff auf die Einbauten, insbesondere die optischen Komponenten, ermöglicht wird. Damit kann beispielsweise an Ort und Stelle auf einfache Weise ein Wechsel der Lichtquelle vorgenommen werden. Ferner ist ein den Optikmodul aufnehmender Oberteil des Grundkörpers gegen einen den Oberteil tragenden Unterteil des Grundkörpers um eine horizontale Achse kippbar und um eine vertikale Achse drehbar ausgebildet. Mit Hilfe dieser Ausbildung kann eine Ausrichtung der optischen Achse des vom Optikmodul ausgestrahlten parallelen Lichtbündels vorgenommen werden. Besonders vorteilhaft ist es, dass bei einer eingestellten Kipp- bzw. Drehposition das Oberteil relativ zum Unterteil beim Aufklappen oder Entfernen des Optikmoduls nicht verändert wird. Folglich entfällt eine zeitaufwändige Neujustage der Leuchtvorrichtung bei einem Lampenwechsel oder bei Wartungsarbeiten.

In einer bevorzugten Ausführungsform der Erfindung ist der Optikmodul vom Grundkörper der Leuchtvorrichtung lösbar ausgebildet. Die Abtrennbarkeit des Optikmoduls erlaubt es, diesen in einer Werkstatt zu warten, ohne dass die komplette Leuchtvorrichtung abgebaut werden muss. Beispielsweise können die Schwenkmittel derart ausgebildet sein, dass der Optikmodul vom Grundkörper ohne Zuhilfenahme von Werkzeugen lösbar ist.

In einer bevorzugten Ausgestaltung der erfindungsgemäßen Leuchtvorrichtung sind zum Einstellen und Fixieren der Kippposition des Oberteils relativ zum Unterteil des Grundkörpers Stellmittel vorgesehen. Hierzu ist ein Mechanismus mit zwei am Oberteil des Grundkörpers gegengleich angreifenden Stellschrauben vorgesehen, die das Oberteil in einer eingestellten Kippposition fixieren. Zum Verändern der Kippposition wird eine der beiden Stellschrauben in dem Maße zurückgeschraubt, mit dem die andere Stellschraube vorgeschraubt wird, wobei das Oberteil um die horizontale Drehachse gekippt wird. Durch diesen Stellmechanismus ist eine sehr genaue Ausrichtung des Winkels der optischen Achse gegen die Vertikale möglich. Die axiale Position einer Stellschraube wird vorzugsweise durch eine am Gehäuse angreifende Kontermutter fixiert. Damit ist eine Arretierung der Kippposition des Oberteils relativ zum Unterteil des Grundkörpers der erfindungsgemäßen Leuchtvorrichtung erreicht.

In einer weiteren bevorzugten Ausgestaltung der Erfindung sind zum Fixieren der Drehposition des Oberteils relativ zum Unterteil des Grundkörpers Arretiermittel vorgesehen. In vergleichbarer Weise kann hiermit eine eingestellte Ausrichtung der optischen Achse des Lichtbündels in Form eines Azimutalwinkels relativ zu einer Grundposition fixiert werden.

Vorzugsweise ist das nichtmetallische Außengehäuse des Grundkörpers als Kunststoffteil, insbesondere als Spritzgussteil, ausgebildet. Auf diese Weise lassen sich mit geringen Herstellungskosten stabile nichtmetallische Außengehäuse für erfindungsgemäße Leuchtvorrichtungen bereitstellen.

Weitere Eigenschaften und Vorteile der erfindungsgemäßen Leuchtvorrichtung ergeben sich aus nachfolgender Beschreibung der Zeichnungen, in deren
- FIG 1: eine Seitenansicht einer erfindungsgemäßen Leuchtvorrichtung in teilweiser Schnittdarstellung,
- FIG 2: eine erfindungsgemäße Leuchtvorrichtung mit Optikmodul in geschlossenem Zustand,
- FIG 3: eine erfindungsgemäße Leuchtvorrichtung mit Optikmodul in aufgeklapptem Zustand,
- FIG 4: eine erfindungsgemäße Leuchtvorrichtung mit Optikvorrichtung in separiertem Zustand schematisch veranschaulicht sind.

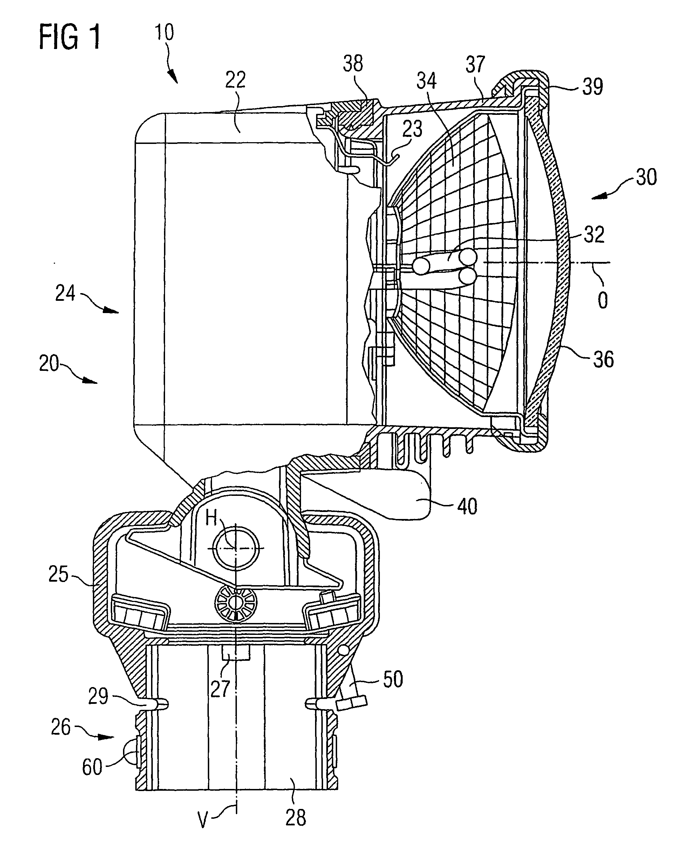

Nach FIG 1 weist eine erfindungsgemäße Leuchtvorrichtung 10 einen Grundkörper 20 zum Aufstellen und Befestigen der Leuchtvorrichtung 10 sowie einen Optikmodul 30 zum Erzeugen eines Lichtbündels längs einer optischen Achse O auf. Der Grundkörper 20 ist von einem nichtmetallischen Außengehäuse 22 umgeben und setzt sich im Wesentlichen aus einem Oberteil 24, einem Zwischenteil 25 und einem Unterteil 26 zusammen. An das Oberteil 24 des Grundkörpers 20 ist der Optikmodul 30 seitlich angesetzt, außerdem beinhaltet es elektrische Komponenten zur Ansteuerung und zum Betrieb des Optikmoduls 30. Das Oberteil 24 stützt sich über einen längs einer horizontalen Drehachse H ausgerichteten Gelenkbolzen auf das Zwischenteil 25 und ist damit um die Drehachse H, die sich in FIG 1 senkrecht zur Blattebene erstreckt, kippbar gelagert. Das Zwischenteil 25 des Grundkörpers 20 ist um eine vertikale Achse V drehbar auf dem Unterteil 26 gelagert. Hierzu ist das Zwischenteil 25 über einen Lagerzapfen 27 in der Tragsäule 28 des Unterteils 26 zentriert. Damit ist die aus Zwischenteil 25, Oberteil 24 und Optikmodul 30 gebildete Baueinheit drehbar um die vertikale Drehachse V bezüglich dem rotationsfesten Unterteil 26 ausgebildet. In der Tragsäule 28 des Unterteils 26 ist eine radiale Einschnürung 29 angeformt, die bei einer Bodenaufstellung der erfindungsgemäßen Leuchtvorrichtung 10 als Sollbruchstelle dient.

Der Optikmodul 30 weist ein an den Seitenquerschnitt des Außengehäuses 22 angepasstes Gehäuse 37 auf, in das ein parabolförmiger Reflektor 34 und etwa zentrisch eine als Halogenlampe ausgebildete Lichtquelle 32 angeordnet sind. An einer für den Lichtaustritt vorgesehenen Vorderseite ist das Gehäuse 37 durch ein Frontglas 36 abgedeckt, das mittels eines am Umfang des Frontglases 36 verlaufenden Frontringes 39 am Gehäuse 37 befestigt ist. Je nach gewünschter Farbe des austretenden Lichtbündels ist die Frontscheibe 36 klar oder rot bzw. grün gefärbt ausgebildet.

Der Optikmodul 30 ist über als Scharnier ausgebildete Schwenkmittel 40 drehbar am Oberteil 24 des Grundkörpers 20 angelenkt. Hierdurch lässt sich der Optikmodul 30 zu einem Wechsel der Lichtquelle 32 oder zu sonstigen Wartungsarbeiten nach unten klappen, um Zugriff auf die Rückwand des Gehäuses 37 bzw. zum Inneren des Gehäuses 22 zu erlangen. Am Ende der Arbeiten wird der Optikmodul 30 wieder hochgeschwenkt, bis eine am Gehäuse 37 umlaufende Dichtung 38 bündig am Außengehäuse 22 des Oberteils 24 anliegt und das federnde Schließblech 23 in einer eingerasteten Verschlussposition in der Rückwand des Gehäuses 37 den Optikmodul 30 festhält. Zum Wiederaufklappen muss die Federkraft des Schließblechs 23 überwunden werden.

Am Aufstellungsort, sei es über die Tragsäule 28 im Boden eingelassen oder auf einem Pfosten oder Mast über dem Boden aufgestützt, muss die Ausrichtung der optischen Achse O eingestellt werden. Über die horizontale bzw. vertikale Drehachse H bzw. V können Polar- und Azimutalwinkel eingestellt werden. Zur Einstellung des Polarwinkels, also der Neigung der optischen Achse O gegen die Vertikale, sind Stellmittel 50 vorgesehen, die als ein Paar schräg von unten in das Zwischenteil 25 eingeschraubten Stellschrauben ausgeführt sind. Die Enden der Stellschrauben berühren Flächen des um die horizontale Drehachse H drehbar angeordneten Oberteils 24, wobei nur die rechte der beiden Stellschrauben in FIG 1 dargestellt ist. Ein Einschrauben der einen Stellschraube ist dabei nur möglich, wenn die andere Stellschraube herausgeschraubt wird. Durch die derart ausgebildeten Stellmittel 50 ist eine sehr feine Justierung der Kippposition des Oberteils 24 relativ zum Unterteil 26 des Grundkörpers 20 möglich. Eine eingestellte Kippposition ist durch Kontermuttern arretierbar. Die Einstellung des Azimutalwinkels, also die Orientierung bezüglich einer Himmelsrichtung, erfolgt durch Drehen der sich auf das Unterteil 26 abstützenden Baueinheit um die vertikale Drehachse V. Zur Fixierung einer eingestellten Drehposition sind als Spannring ausgebildete Arretiermittel 60 vorgesehen, die das Außengehäuse des Zwischenteiles 25 umgreifen und dieses beim Festspannen gegen die Tragsäule 28 pressen.

Die erfindungsgemäße Leuchtvorrichtung 10 dient beispielsweise als Signaleinrichtung für die Luftfahrt oder für andere Verkehrsbereiche, insbesondere für den Annäherungsbereich, den Schwellen- und Endmarkierungen von Landebahnen eines Flugplatzes. Die nichtmetallische Kunststoffausführung des Außengehäuses 22 des Grundkörpers 20 hat ein geringeres Gewicht, was den Wechsel einer erfindungsgemäßen Leuchtvorrichtung 10 im Feld erleichtert, sowie eine höhere Korrosionsbeständigkeit zur Folge, was die Lebensdauer der Leuchtvorrichtung 10 verlängert. Außerdem ermöglicht diese Bauweise kleinere Abmessungen, mit denen eine geringere Windempfindlichkeit einhergeht, und damit die Zerbrechlichkeit einer erfindungsgemäßen Leuchtvorrichtung 10 verbessert. Außerdem ist es möglich, die Leuchtvorrichtung 10 mit kleineren Außenmaßen auf höheren Befestigungsmasten anzubringen. Der Kippmechanismus befindet sich bei einer erfindungsgemäßen Leuchtvorrichtung 10 im Inneren des Grundkörpers 20 und ist damit geschützt angebracht. Ein und derselbe Grundkörper 20 ist für Optikmodule sowohl im Dauer- als auch im Blinklichtbetrieb geeignet. Die Leuchtvorrichtung 10 ist über Dichtungen gegen Wasser- oder Staubeintritt geschützt. Starkstromkabel verlaufen komplett innerhalb des Grundkörpers 20 und sind dadurch ebenfalls geschützt.

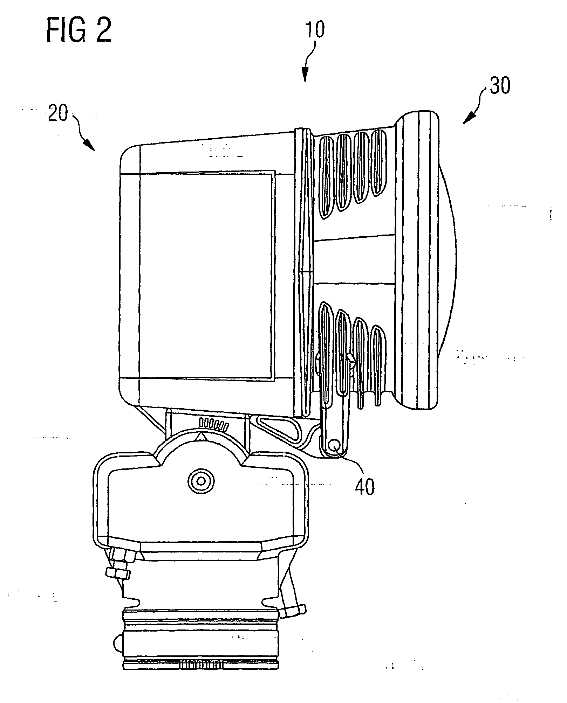

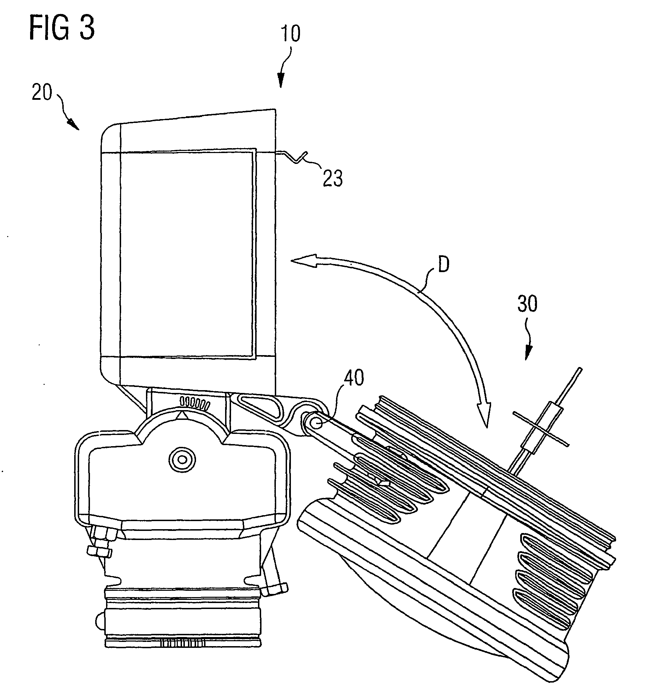

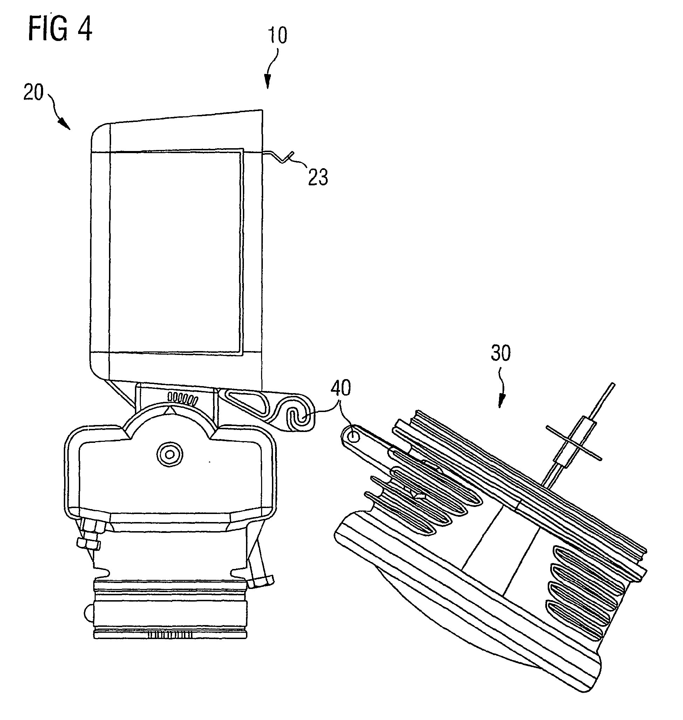

Ein wesentlicher Vorteil der erfindungsgemäßen Leuchtvorrichtung 10 bezieht sich auf die erhöhte Wartungsfreundlichkeit und ist nachfolgend in den FIG 2 bis FIG 4 veranschaulicht. FIG 2 zeigt eine Leuchtvorrichtung 10 mit einem Grundkörper 20, an den der Optikmodul 30 über Schwenkmittel 40 angelenkt ist, wobei der Optikmodul 30 hochgeklappt am Grundkörper 20 ansetzt und sich damit in Betriebsstellung befindet. Etwa zum Auswechseln der Lichtquelle 32 wird der Optikmodul 30 entsprechend dem Richtungspfeil D nach unten geschwenkt, so dass freier Zugriff auf die Rückwand des Optikmoduls 30 besteht. Nach dem Lichtquellenwechsel oder nach anderen vor Ort durchführbaren Wartungsarbeiten wird der Optikmodul 30 über die als Scharnier ausgebildeten Schwenkmittel 40 nach oben geklappt, bis das Schließblech 23 in seine Schließstellung geschnappt ist. Sollte ein kompletter Wechsel des Optikmoduls 30 oder eine eingehendere Wartung desselben in der Werkstatt vorgenommen werden, so ist gemäß FIG 4 der Optikmodul 30 vom Grundkörper 20 völlig lösbar. Hierfür können die an Halteblechen des Optikmoduls 30 angeordneten Stifte aus einem schnekkenförmigen Stützblech des Grundkörpers 20 herausgeführt werden, ohne dass dazu ein Demontagewerkzeug nötig ist.

## Patentansprüche

1. Unidirektionale Leuchtvorrichtung (10) zum Beleuchten von Objekten und/oder Markieren von Fahrbahnen, vorzugsweise im Flughafenbereich, mit einem ein nichtmetallisch ausgebildetes Außengehäuse (22) aufweisenden Grundkörper (20) zum Aufstellen und Befestigen der Leuchtvorrichtung (10) und mit mindestens eine Lichtquelle (32), einen Reflektor (34) und ein Frontglas (36) umfassenden optischen Komponenten zum Erzeugen eines Lichtbündels längs einer optischen Achse (O), wobei die optischen Komponenten (32, 34, 36) in einem an den Grundkörper (20) ansetzbaren Optikmodul (30) angeordnet sind, der über Schwenkmittel (40) drehbar (D) am Grundkörper (20) angelenkt ist, wobei der Optikmodul (30) zwischen einer am Grundkörper (20) ansetzenden Betriebsstellung und einer geöffneten Wartungsstellung mit ungehindertem Zugriff auf die optischen Komponenten (32,34,36) verschwenkbar ist,
**dadurch gekennzeichnet, dass** ein den Optikmodul (30) aufnehmender Oberteil (24) des Grundkörpers (20) gegen einen den Oberteil (24) tragenden Unterteil (26) des Grundkörpers (20) um eine horizontale Achse (H) kippbar und um eine vertikale Achse (V) drehbar ausgebildet ist.

2. Leuchtvorrichtung nach Anspruch 1,
**dadurch gekennzeichnet, dass** der Optikmodul (30) vom Grundkörper (20) lösbar ausgebildet ist.

3. Leuchtvorrichtung nach Anspruch 1 oder 2,
**dadurch gekennzeichnet, dass** zum Einstellen und Fixieren der Kippposition des Oberteils (24) relativ zum Unterteil (26) des Grundkörpers (20) Stellmittel (50) vorgesehen sind.

4. Leuchtvorrichtung nach einem der Ansprüche 1 bis 3,
**dadurch gekennzeichnet, dass** zum Fixieren der Drehposition des Oberteils (24) relativ zum Unterteil (26) des Grundkörpers (20) Arretiermittel (60) vorgesehen sind.

5. Leuchtvorrichtung nach einem der Ansprüche 1 bis 4,
**dadurch gekennzeichnet, dass** das nichtmetallische Außengehäuse (22) des Grundkörpers (20) als Kunststoffteil, vorzugsweise als Spritzgussteil, ausgebildet ist.

## Claims

1. Unidirectional lighting device (10) for illuminating objects and/or for marking lanes, preferably in the airport area, having a main body (20) for erecting and fastening the lighting device (10), said main body including a non-metallic external housing (22), and having optical components including at least a light source (32), a reflector (34) and a front glass (36) for generating a light beam along an optical axis (O), wherein the optical components (32, 34, 36) are arranged in an optics module (30) which can be attached to the main body (20), said optics module (30) being rotatably (D) linked to the main body (20) via pivoting means (40), wherein the optics module (30) can be swung between an operating position in which it is fixed to the main body (20), and an opened maintenance position giving unimpeded access to the optical components (32, 34, 36),
**characterised in that** an upper part (24) of the main body (20), which upper part includes the optics module (30), can be tilted about a horizontal axis (H) and rotated about a vertical axis (V) in relation to a lower part (26) of the main body (20), which lower part supports said upper part (24).

2. Lighting device according to claim 1,
**characterised in that** the optics module (30) can be separated from the main body (20).

3. Lighting device according to claim 1 or 2,
**characterised in that** adjusting means (50) are provided for adjusting and fixing the tilt position of the upper part (24) relative to the lower part (26) of the main body (20).

4. Lighting device according to one of claims 1 to 3,
**characterised in that** locking means (60) are provided for fixing the rotational position of the upper part (24) relative to the lower part (26) of the main body (20).

5. Lighting device according to one of claims 1 to 4,
**characterised in that** the non-metallic external housing (22) of the main body (20) is designed as a plastic part, preferably an injection moulded part.

## Revendications

1. Dispositif (10) d'éclairage unidirectionnel pour éclairer des objets et/ou des balises de pistes de préférence dans un aéroport comprenant un corps (20) de base ayant une enveloppe (22) extérieure non métallique pour ériger et fixer le dispositif (10) d'éclairage et au moins une source (32) lumineuse, un réflecteur (34) et des composants optiques qui comprennent un verre (36) avant et qui sont destinés à produire un faisceau lumineux le long d'un axe (O) optique, les composants (32, 34, 36) optiques étant disposés dans un module (30) optique pouvant être mis sur le corps (20) de base et articulés par des moyens (40) d'articulation de manière à pouvoir tourner (D) sur le corps (20) de base, le module (30) optique pouvant basculer entre une position de fonctionnement où il est mis sur le corps (20) de base et une position d'attente ouverte, dans laquelle il n'est pas fait obstacle à un accès aux composants (32, 34, 36) optiques,
**caractérisé en ce qu'**une partie (24) supérieure du corps (20) de base recevant le module (30) optique est constituée de manière à pouvoir basculer autour d'un axe (H) horizontal vers une partie (26) inférieure du corps (20) de base portant la partie (24) supérieure et de manière à pouvoir tourner autour d'un axe (V) vertical.

2. Dispositif d'éclairage suivant la revendication 1, **caractérisé en ce que** le module (30) optique est constitué de manière à pouvoir être détaché du corps (20) de base.

3. Dispositif d'éclairage suivant la revendication 1 ou 2, **caractérisé en ce que**, pour régler et fixer la position de basculement de la partie (24) supérieure par rapport à la partie (26) inférieure du corps (20) de base, il est prévu des moyens (50) de réglage.

4. Dispositif d'éclairage suivant l'une des revendications 1 à 3, **caractérisé en ce que**, pour fixer la position en rotation de la partie (24) supérieure par rapport à la partie (26) inférieure du corps (20) de base, il est prévu des moyens (60) de blocage.

5. Dispositif d'éclairage suivant l'une des revendications 1 à 4, **caractérisé en ce** l'enveloppe(22) extérieure non métallique du corps (20) de base est sous la forme d'une pièce en matière plastique, de préférence d'une pièce moulée par injection.
